# EUROPEAN PATENT SPECIFICATION

(11) **EP 3 689 583 B1**
(45) Date of publication and mention of the grant of the patent: **23.10.2024**
(21) Application number: 19154650.6
(22) Date of filing: 31.01.2019
(51) Int. Cl.: B29C 64/245, B33Y 30/00, B28D 7/04, B23Q 1/01

(54) **A PRINTING PLATFORM FIXTURE APPARATUS FOR USE WITH A 3D-PRINTER**
VORRICHTUNG ZUR BEFESTIGUNG EINER DRUCKPLATTFORM ZUR VERWENDUNG MIT EINEM 3D-DRUCKER
APPAREIL DE FIXATION DE PLATE-FORME D'IMPRESSION À UTILISER AVEC UNE IMPRIMANTE 3D

(43) Date of publication of application: 05.08.2020
(73) Proprietor: CurifyLabs Oy, 00180 Helsinki (FI)
(72) Inventor: MEHTA, Santosh, 00180 Helsinki (FI); HEINO, Petri, 00180 Helsinki (FI)
(74) Representative: Hovinen, Jari Juhani

(56) References cited:
- EP-A1- 3 446 859
- DE-U1- 29 907 262
- US-A1- 2014 085 620
- US-A1- 2018 272 610

## Description

### FIELD

The present invention relates to an extrusion-type 3D-printer comprising a printing platform fixture apparatus. Further, the present invention relates to use of the extrusion-type 3D-printer.

Certain embodiments in this disclosure provide a solution for bed attachment and alignment in 3D printing applications, in particular in the field of extrusion-based technologies such as Fused Deposition Modelling (FDM) and Fused Filament Fabrication (FFF). More specifically, the present disclosure provides a printing platform fixture apparatus for use with a 3D-printer.

### BACKGROUND

Additive manufacturing systems, such as 3D printers, typically have a printing platform or bed onto which the object to be printed is formed during the printer process. Precise alignment of the printing platform is essential for accurate forming of three-dimensional objects, but is often difficult due to the typical printer having manual insertion and removal of the printing platform. The invention disclosed herein aims to provide for a more accurate alignment as well as automatic alignment for 3D printer printing platforms, specifically extrusion-based printers.

Existing systems attempt to solve the alignment problem by one of three methods: using adjustable springs to set the printing platform alignment, self-levelling systems which use a sensor and then changes the plane in the control software or a planarizing process, which aims to fix the level problem automatically. The present disclosure provides a novel technical solution to the alignment problem compared to these methods.

An example of the adjustable spring method is US Patent 9,248,600, which describes printing platform levelling and homing. In the multi-point levelling operation, the extruder is moved to the z-axis origin at a number of X-Y positions within the plane of the printing platform, and the height of the printing platform is adjusted to meet the extruder at the origin. The height adjustment is typically performed with a screw-compressed spring. However, vibrations in the machine will cause the adjustment to change over time, which leads to the requirement of constant re-calibration.

An example of the self-levelling system is EP Publication 3135460, which discloses a print bed levelling system for an additive manufacturing system, comprising a nozzle head assembly movably arranged with respect to a substantially flat print bed member, wherein the nozzle head assembly comprises one or more nozzle bodies each having a nozzle end, and a contactless sensor member disposed at a print bed engagement end of the nozzle head assembly. The contactless sensor member comprises a sensing surface in sensing engagement with the print bed member over a relative sensing distance range between a distal sensing position and a proximal sensing position.

An example of the planarizing process method is EP publication 2815872, which discloses a method for printing a three-dimensional part with an additive manufacturing system, the method comprising generating and printing a planarizing part having a substantially-planar top surface relative to a build plane, and a bottom surface that substantially mirrors a topography of a platen surface, and printing the three-dimensional part over the substantially-planar top surface of the printed planarizing part.

US 20180272610 A1 discloses an apparatus and method for making a three-dimensional object from a solidifiable material using a linear solidification device is shown and described. The apparatus includes a solidification substrate assembly that is tiltable about a tilting axis to peel a solidification substrate from a recently formed object surface and to level the solidification substrate assembly and squeeze out accumulated solidifiable material between the solidification substrate and the recently formed object surface. Intelligent peeling and leveling may also be provided by providing a tilting parameter database that is used to adjust tilting parameters based on object geometry and/or solidifiable material properties.

DE 29907262 U1 discloses a device for producing a three-dimensional object using rapid prototyping, in which an accurate and reproducible positioning of the object and a greater variability in production are made possible.

EP 3446859 A1 discloses a formation platform for a three-dimensional printing device is provided. The formation platform includes a base, one or more positioning assemblies, a substrate, and one or more calibration assemblies. The positioning assembly includes a clamper and a resilient element, the clamper is movably disposed at the base, and the resilient element is associated with the clamper to push the clamper toward the base. The substrate is disposed on the base, and a portion of an edge of the substrate is compressed by the clamper to fix the substrate on the base. The calibration assembly includes a screw rod; the screw rod is disposed on the base and in contact with the substrate. By the positioning assembly collaborating with the calibration assembly, horizontal adjustment of the substrate can be made, and the substrate can be easily installed or removed.

US 2014/0085620 A1 discloses 3D printing systems and methods avoid build-compromising misalignments through the use of a self-leveling assembly that maintains a constant and typically fully parallel orientation between a build platform and the bottom surface of a resin tank. As a result, contact between the floor of the resin tank and the build platform surface may be uniformly flat and even, and perpendicular to the z-axis motion of the deposition source.

The previously known methods require the user or maintenance personnel to align the printing bed, or for the machine to otherwise perform an alignment function e.g. via software. The alignment process in these methods may require significant time and effort and may require additional hardware and software solutions to be implemented as part of the 3D printing apparatus.

### SUMMARY OF THE INVENTION

The invention is defined by the features of the independent claims. Some specific embodiments are defined in the dependent claims.

According to a first aspect of the present invention, there is provided an extrusion-type 3D-printer comprising a printing platform fixture apparatus, the apparatus comprising: a printing platform carriage, comprising at least one force member configured to support and exert a force on a removable printing platform, and at least one clamp; wherein the at least one force member is a ball plunger, and wherein the at least one ball plunger is configured to support and exert a force on a removable printing platform in such a manner that at least one surface of the removable printing platform contacts at least one surface of the clamp.

Various embodiments of the first aspect may comprise at least one feature from the following bulleted list:
- the apparatus comprises 2-8 force members,
- the at least one force member is configured in such a manner that the at least one surface of the removable printing platform will contact at least one surface of the clamp on the opposite side of the printing platform side from the force member,
- the printing platform has a thickness of 1 millimeter to 100 millimeters, in particularly from 2 to 50 millimeters, preferably from 3 to 5 millimeters,
- the clamp is a continuous profile extending the length of the printer bed carriage,
- the total forces of force members are 10-150 newtons, especially 25-75, for example about 33 newtons,
- the clamp is fixedly attached to the printing platform carriage or is an integral part of the printing platform carriage,
- the printing platform carriage comprises a stopper configured to prevent the printing platform from movement in a direction perpendicular to the printing platform carriage,
- the at least one force member is arranged such that it presses the removable printing platform against a surface of the clamp,
- the direction of movement of the printing platform carriage is limited to a single dimension in relation to the base plate,
- the direction of movement of the printing platform comprises one, two, three axes of at least one of the following: Cartesian coordinates, polar coordinates,
- the material of the printing platform is ceramic, glass or metal,
- the clamp comprises a contacting surface parallel to the upper surface of the printing platform carriage.

According to a second aspect of the present invention, there is provided use of the extrusion-type 3D-printer according to any one of the other aspects.

According to a third aspect of the present invention, there is provided a 3D-printer apparatus comprising: a base plate, a printing platform carriage, comprising at least one force member and at least one clamp; a removable printing platform, and a movable extrusion head, wherein the at least one force member exerts a force on the printing or building platform in such a manner that at least one surface of the printing or building platform contacts at least one surface of the clamp.

Various embodiments of the second or third aspect may comprise at least one feature from the following bulleted list:
- the apparatus comprises 2-8 force members,
- the at least one force member is configured in such a manner that the at least one surface of the removable printing platform will contact at least one surface of the clamp on the opposite side of the printing platform side from the force member,
- the printing platform has a thickness of 1 millimeter to 100 millimeters, in particularly from 2 to 50 millimeters, preferably from 3 to 5 millimeters,
- the clamp is a continuous profile extending the length of the printer bed carriage,
- the total forces of force members are 10-150 newtons, especially 25-75, for example about 33 newtons,
- the clamp is fixedly attached to the printing platform carriage or is an integral part of the printing platform carriage,
- the printing platform carriage comprises a stopper configured to prevent the printing platform from movement in a direction perpendicular to the printing platform carriage,
- the at least one force member is arranged such that it presses the removable printing platform against a surface of the clamp,
- the direction of movement of the printing platform carriage is limited to a single dimension in relation to the base plate,
- the material of the printing platform is ceramic, glass or metal,
- the clamp comprises a contacting surface parallel to the upper surface of the printing platform carriage.

### BRIEF DESCRIPTION OF THE DRAWINGS

FIGURE 1 illustrates an a schematic view of an example apparatus comprising a base plate, a printing platform and a printing platform carriage, capable of supporting at least some embodiments of the present invention, and
FIGURE 2 illustrates a schematic view of an example apparatus comprising a printing platform, a force member, a clamp and a printing platform carriage, capable of supporting at least some embodiments of the present invention, and
FIGURE 3 illustrates a schematic view of an example 3D printing apparatus capable of supporting at least some embodiments of the present invention, and
FIGURE 4 illustrates a schematic view of an example apparatus comprising at least two force members, a printing platform and a printing platform carriage, capable of supporting at least some embodiments of the present invention, and
FIGURE 5 illustrates a schematic view of an example apparatus comprising a base plate, at least two force members, a printing platform and a printing platform carriage, capable of supporting at least some embodiments of the present invention, and
FIGURE 6 illustrates a schematic view of an example apparatus comprising a printing platform, a force member, a clamp and a printing platform carriage, capable of supporting at least some embodiments of the present invention, and
FIGURE 7 illustrates a schematic view of an example 3D printing apparatus comprising at least one force member, capable of supporting at least some embodiments of the present invention.

### EMBODIMENTS

The invention disclosed herein provides an apparatus and method for aligning a printing platform in a 3D printing device, more specifically by providing a high-tolerance clamp and force member as part of the printing platform carriage, wherein the force member pushes the printing platform against the clamp using a predetermined force.

In the embodiments of the present disclosure, accurately machined or fabricated components with machined or fabricated surfaces are used. The machined or fabricated surfaces of such components may be known as reference parts or reference surfaces. These parts may be comprised of CNC machined plates. In accordance with this disclosure, parts, surfaces, reference surfaces, contact surfaces may be machined or fabricated to a high degree of flatness. Flatness is defined herein as follows: the surface is contained within two parallel planes X millimeters apart, wherein X is the desired flatness tolerance. Alternatively or additionally, a flatness definition in accordance with the standard ISO 1101:2017 may be used. Within the disclosure, the flatness of parts or surfaces may be less than 1 millimeter, preferably less than 0.5 millimeters, for example 0.2 millimeters. For a designated reference or contact surface, the flatness may be less than 0.2 millimeters, preferably less than 0.1 millimeters, for example less than 0.05 millimeters. An exemplary range of flatness is between 0.15 millimeters and 0.50 millimeters. A benefit of the ranges disclosed herein is that the precise surfaces allow for accurate construction of the printing plate support apparatus. Another benefit is that any parts such as the force members or printing plate will be accurately positioned with respect to the 3D printing apparatus or printing plate support apparatus, which ultimately leads to good printing accuracy.

The material of the parts may be aluminium, iron, titanium, steel, alloy steel, bearing steel, stainless steel or any combination or alloy thereof. An exemplary product suitable for use in the context of the disclosure is a cast plate which is then machined to have suitable flatness characteristics. The plate may comprise aluminium. For example, MIC 6 plates or Plancast plates are suitable for use in the context of the embodiments disclosed herein.

In this document, the term "clamp" means a structure against which a printing platform can be pressed. In at least some of the embodiments of the disclosure, the clamp is an L-shaped profile which is fixedly attached to a printing platform carriage or an integral part of the printing platform carriage. The clamp may comprise a contacting surface facing towards an upper surface of a base platform of the printing platform carriage. In other words, the clamp is shaped such that a part of a removable printing platform can be inserted into a cavity between the contacting surface and the base platform of the printing platform carriage. The clamp comprises at least one reference surface or designated contact surface which contacts the printing platform. This reference surface is flat and fabricated and/or machined with high accuracy, in accordance with the flatness ranges disclosed elsewhere in this disclosure. As a result the printing platform will be level when pressed against the clamp, which acts as a datum surface or a known good. The clamp may comprise at least one of the following: a latch, a hook, a bolt, a disc, a wheel, a detent. The clamp may also comprise at least one of the fastening elements or force members detailed elsewhere in this disclosure.

Regarding the build platform, also known as the bed or the printing platform, the printing platform comprises a flat planar plate. The material is plastic.

In the embodiments of this disclosure, several elements, parts, modules, or assemblies are attached to each other. Such attachment may be facilitated by any of the following solutions singly or jointly: adhesive, hook-or-loop fastener, screws, bolts, clasps, locks, nails, snap-fits, snap-fasteners, zip-ties, magnets, electro-magnets.

In at least some of the embodiments of this disclosure, at least one pin or dowel is used to attach elements, parts, modules, or assemblies to one another. The at least one pin may also be used for accurately positioning components both during construction of the apparatus as well as during the operation of the apparatus. The at least one pin may comprise plastic, metal such as aluminium, iron, titanium, steel, alloy steel, bearing steel, stainless steel or any combination or alloy thereof. The at least one pin may be sized from a diameter of 1 millimeter to up to 12 millimeters, preferably having a diameter of substantially 6 millimeters. Correspondingly, the length of the at least one pin may be from 5 millimeters to 50 millimeters, preferably having a length of substantially 10 millimeters. An example of the at least one pin is Misumi part number MSTH6-10. An additional example is MSH3-10. The at least one pin may have a tolerance class h7 and a diameter of 6 millimeters with a tolerance of 0/-0.012 millimeters. This tolerance allows clearance of approx. 0.01mm when connecting parts together in assembly. The at least one pin may have a threaded hole, such as an M4-sized hole, for easy removal and replacement. In at least some of the embodiments of this disclosure, at least one linear guide is used to facilitate relative motion between components. The at least one linear guide may comprise metal such as aluminium, iron, titanium, steel, alloy steel, bearing steel, stainless steel or any combination or alloy thereof. The at least one linear guide may conform to at least one industry standard specification. The at least one linear guide may be of the slight clearance type with an exemplary clearance of 0 to +15 micrometers. Alternatively or additionally, the slight preload type may be used with exemplary zero clearance (-3 to 0 micrometers). In at least one embodiment of the current disclosure 2 rails and 4 blocks are used. Therefore the embodiment comprises 2 pairs of rails, each with 4 blocks. The preponderance of the rails and blocks along with the accurate tolerances of the rails and blocks results in the embodiment being a very rigid and stiff system in the mechanical sense as well as a system having a long lifetime. The rails and blocks are manufactured so that installation height variation varies from 7 micrometers for precision grade to 40 micrometers for clearance grade. In at least some of the embodiments of this disclosure, precision grade components are used. In at least some of the embodiments of the disclosure, rotating, recirculating bearing balls are used inside at least one block.

In at least some of the embodiments of the disclosure, miniature linear guide rails made of stainless steel, bearing steel or carbon steel having rail width of 6 millimeters to 18 millimeters, preferably between 8 and 13 millimeters, in particular 9 millimeters or 12 millimeters are used. In at least some embodiments, for the Y axis bed assembly also called the base carriage, a rail with a width of 12 millimeters is used, for at least the beneficial reason that the height of the rail provides space for components to be assembled beneath the bed. In at least some of the embodiments of the disclosure, carbon steel can be used. An example of a linear guide for use with at least some of the embodiments of the disclosure is Misumi SEBLV13-70.

When assembling at least some of the embodiments of the disclosure, a datum plane may be used for aligning the linear guide rail to the 3D printing apparatus. The datum surface uses accurate pins and/or a machined slot, into which the rail is pushed during assembly.

In at least some of the embodiments of the disclosure, the linear motion may be implemented using at least one of the following: linear bearings with supported rails, linear bearings with unsupported rails. In addition, complete linear actuators such as a single axis actuator or a dual axis cross feed table can be used.

The advantage of using the linear guides as disclosed above with the embodiments of the disclosure is the best rigidity and accuracy, as well as also providing suitable dimensions for current setup (correct dimensions, high resistance to external mechanical forces and accurate precision due to high tolerance machining).

In some of the embodiments of the present disclosure, force members are used for interactions between components. Such force members may comprise at least one of the following: a spring, a ball plunger, a leaf spring, a pneumatic damper, a hydraulic damper, a magnet, an electromagnet. A force member may be any mechanism which has a physical effect of applying force on an object. The force application may be constant, tunable, or toggleable. The force member may be comprised of at least one of the following types of mechanism: lateral ball plunger, double ball plunger. The force member may also be comprised of at least one of the following: a wheel, an omnidirectional tread or wheel, a spring. A spring as discussed herein may be any mechanism which stores mechanical energy. Exemplary spring types are coil springs, helical springs, cantilever springs, gas springs, volute springs, hairsprings, wave springs. Leaf springs may be elliptic, semi-elliptic, parabolic or other types of leaf spring. A beneficial force member such as a ball plunger facilitates the sliding motion of the printing platform or plate being inserted or removed. For example, the ball of the ball plunger rotates during the insertion/removal action due to the initial friction between the platform and the ball, which makes the action require less force.

With respect to the leaf springs used in at least some embodiments of this disclosure, the leaf spring may be simply supported or cantilever type, preferably simply supported. Factors affecting the leaf spring suitability for use with the embodiments of the disclosure are the selection of the spring steel material, the bending radius and arc length, the compression distance after installation of the printing platform and the possible precompression of the spring before insertion of the printing platform. A specific custom-made spring can be used in at least some embodiments, resulting in the correct spring constant for the application.

An exemplary leaf spring suitable for use with the embodiments of the disclosure is as follows: The spring is a stainless steel leaf spring comprised of EN 10151-1.4310 - AISI 301 and having a thickness of 0.4 millimeters, a width of 10 millimeters and a length between 70 millimeters and 100 millimeters. The spring is simply supported and it forms a complete arch (similar to reversed U sign), where one end of the spring is fixed with two fasteners, for example bolts, which hold the spring, so that spring does not shift during use. The fasteners also stop it from rotating and therefore being misplaced while the apparatus is in use. The free end allows the leaf spring to deform and slide freely during the insertion of the printing platform. The free end of the spring may be radiused to allow smooth movement. Alternatively or additionally, a cantilever configuration is formed by using a leaf spring which is shorter, so that the arch doesn't fully extend and touch the carriage part.

The force member usable in the context of this disclosure is a ball plunger. A ball plunger comprises a body, a spring and a ball. The spring may be any type of spring; typically a helical spring is used. The body has a cavity to contain the spring. The cavity is open at one end and the ball protrudes from the body. Inside the body, the spring contacts the ball. When force is exerted on the ball, the ball compresses the spring and the ball moves further into the cavity. When the force is removed, the spring decompresses, pushing the ball outwards from the cavity. An example of a ball spring is BPJ-N8 from Misumi Corporation. The ball is made out of 52100 bearing steel and the body is made out of 4137 alloy steel. The BPJ-N8 has a stroke of 1 millimeter, an initial load of 6.9 newtons and a maximum load of 19.6 newtons. Different sized ball plungers with different load characteristics may be used in the context of this disclosure.

A clamp is used to hold the printing platform in place. The clamp may also be referred to as a bracket or catch. Such a clamp may be manufactured out of the materials disclosed elsewhere in this disclosure, such as e.g. machined aluminium. One or more surfaces of the clamp are used as reference parts and at least those surfaces will be machined to a high tolerance. The clamp may be fastened to other components using the fastening means previously disclosed, such as e.g. bolts.

The invention as disclosed herein is suited for use with all 3D printing technologies, such as binder jetting, directed energy deposition, material extrusion, material jetting, powder bed fusion, sheet lamination, and vat photopolymerization, as defined in the standard ISO/ASTM52900-15. However, it is envisioned that the present disclosure is particularly relevant for extrusion-based systems such as fused filament fabrication. In these systems the mechanical forces may be relatively high between the extrusion head and the part to be printed (and therefore the printing platform). In addition, the vibrations of the motors actuating the extrusion head and/or the printing platform may have an adverse effect on the alignment of the printing platform. Typically, extrusion-based systems employ a removable printing platform, which makes the alignment of the printing platform more challenging. It is the objective of the present disclosure to solve at least some of the problems presented herein.

A fused filament fabrication-type 3D printer, suitable for use with the invention disclosed herein, comprises an extrusion head, a printing platform as well as means to move the head and/or the platform and a controller. Typically the movement is done in Cartesian directions, i.e. orthogonal directions. However, polar directions of movement are also known in the art. The extrusion head is typically a heated nozzle and filament is pushed into the nozzle, where it melts and is extruded onto the printing platform. Moving the extrusion head relative to the printing platform (or vice versa) results in a two-dimensional shape being extruded onto the printing platform. Moving the head in the height direction relative to the printing platform makes it possible to create multiple layers. The printing process typically operates one layer at a time.

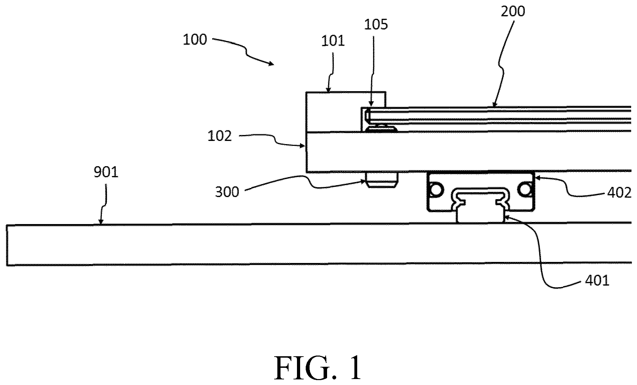

In an exemplary embodiment in accordance with the present disclosure and as shown in Figure 1, the 3D printing apparatus comprises: at least one base plate 901, a printer bed carriage 100 comprising a carriage base 102 and a clamp 101, a printing platform 200, a force member 300 and at least one linear bearing unit 400 comprising the linear rail 401 and the linear slide 402. Figure 1 is a schematic view of roughly one half of the printer bed carriage 100 wherein the remainder of the apparatus has been omitted for the sake of clarity. It is understood that at least some of the elements visible in the figure will be duplicated or mirrored relative to e.g. the axial line shown at the right edge of the figure.

In the exemplary embodiment, the apparatus is built upon a reference part 901 also referred to as the base plate. The base plate 901 comprises accurate aluminium plates, for example Alumeco EN AC-5083 which is manufactured to excellent dimensional stability and precision milled on both sides. The gantry which supports the carriage base is constructed on top of the base plate 901. The carriage base 102 and the bed sliding supports (at least one bearing unit 400) can be made of the same material, or optionally of different materials. Other materials are also suitable for use with the invention, as long as they are finished to a similar quality level and have a very high level of flatness. In at least some of the embodiments of the disclosure, the carriage and the clamp parts comprise two different pieces. In an exemplary embodiment, the clamp part 101 also acts as a bed sliding support and the force members are used to hold the bed against the clamp part 101 (clamp/sliding supports). A beneficial embodiment in accordance with this disclosure is wherein the printing platform is pressed by at least one force member against the contacting surface of the clamp, wherein the contacting surface is parallel to at least one reference surface.

The base plate is combined with accurate linear bearing units 400, such as for example linear ball guides which are manufactured to extreme flatness and with very little or zero height variation. The linear bearing unit is comprised of the rail 401 and the slide 402, of which the rail is fixed to the base plate via bolts and/or fastening means disclosed elsewhere in this disclosure. The slide 402 is likewise fixed to the carriage base 102 via bolts or other fastening means. The base plate and linear bearing unit combination provides an accurate platform for the printer bed carriage, which in turn supports the force member 300 (for example a spring mechanism) which supports the build plate as well as forces the build plate upwards to contact the clamp.

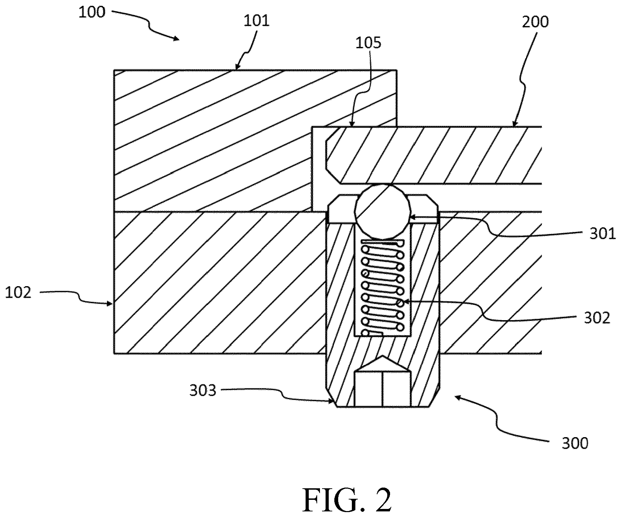

Figure 2 is a cross-section of the printer bed carriage 100 which comprises a carriage base 102 and at least one clamp 101 as well as at least one force member 300. The carriage base 102 is connected to the at least one clamp 101, or optionally, the clamp 101 and base 102 are a single part. For example, the base 102 may have a feature such as the clamp 101 machined into it. The clamp 101 comprises at least one contact surface (reference surface) 105, which is machined or fabricated to a high degree of flatness. The contact surface 105 contacts at least one edge of the printing platform 200, such as the upper edge, due to the force F exerted by the force member 300.

To achieve the required tolerances for extrusion-based 3D printing, the embodiment provides a printing platform 200 which is flat with substantially no surface height variations. The printing platform 200 is also held accurately in the printer bed carriage 100 so that the distance between the printing platform 200 (also called the bed or plate) and the 3D printing nozzle (comprised in the extrusion device 500) is substantially constant, with final height (z-axis motion) variation of less than 0,05mm or preferably less than 0,02mm height difference over the total build plate's area in both longitudinal (Y) and horizontal (X) directions. In an exemplary embodiment, the printing platform 200 comprises a glass plate which is 4 millimeters thick, 238 millimeters wide and 153 millimeters long. The exemplary glass plate has 1 millimeter edge chamfers.

The clamp 101 is fixedly attached to the carriage base. The clamp may be shaped like an inverted letter L, wherein the short edge of the L is the contact surface 105 which contacts the build plate. In an exemplary embodiment shown in Figure 2, the printing platform is 4 millimeters thick and the space between the clamp surface 105 and the upper surface of the carriage 102 is 6 millimeters. The clamp may have clearance or leeway for the build plate in any dimension. In an exemplary embodiment, the clamp provides a 1 millimeter gap in the direction parallel to the build plate plane. In a second exemplary embodiment, the clamp provides a 1 millimeter gap in the direction parallel to the build plate plane. In an alternative embodiment, the clamp may be shaped differently and/or have different dimensions.

The clamp 101 may be a continuous profile, extending the length of the printing platform carriage. In an alternative embodiment, the clamp may extend the length of the printing platform. In a second alternative embodiment, the clamp may be formed out of several sections of the profile, i.e. each force member has a corresponding clamp. The above-mentioned clamp embodiments are usable singly or jointly with the embodiments of the invention listed herein.

The force member 300 is fixed to the carriage base 102, as exemplarily seen in Figures 1 and 2. The force member may comprise the rotating element 301, the actuating element 302 and the housing 303, in accordance with details provided elsewhere in this disclosure. The rotating element may comprise a ball or a wheel. The actuating element may comprise a spring, magnet or cylinder. The force member 300 may be fixed to the base 102 in several ways, which are not illustrated specifically in figure 2. One way is via a threaded hole in the base 102 which the force member screws into, exemplarily a threaded hole in accordance with the M8 size. Additionally or alternatively with the threaded hole, an adhesive thread locking compound, such as for example Loctite 270, may be used to lock the force member to the desired correct length, or a suitable nut such as an M8 nut may be used to secure the free thread length in embodiments wherein the thread is protruding from the carriage base, or a setscrew may be used. Locking the force member may mean in this context to lock the orientation or the distance the force member is within the base or clamp.

The force member 300 may also be of the following types: a member with a cylindrical housing comprising at least one of a flange, press fit installation or adhesive installation into a drilled hole, or a threaded type force member comprising a socket head, wherein the member can be fully tightened into the hole by rotating the socket head relative to the hole. The force member may also be attached by any of the fastening means disclosed elsewhere in this disclosure. Another possibility in accordance with at least some embodiments of the disclosure is the housing of the force member being comprised directly or indirectly by the component of the apparatus the force member is attached to, for example the ball and spring may be inserted into a machined space within the component.

The longitudinal axis of the force member 300 may be orthogonal with respect to the plane of the build plate 200, or the angle between the longitudinal axis of the force member and the build plate plane may be between 0 and 90 degrees. In the case of the angle being 0 degrees, the longitudinal axis of the force member is essentially parallel to the printing platform and therefore in that case the force member may be fixed to the clamp 101, the carriage base 102, or both. The force member may also be fixed to the clamp and exert a force F on the build plate 200, in that case the force F will be directed towards the base plate. In the embodiment shown in Figure 2, the force F is directed upwards, towards the clamp surface 105. Therefore, the force F acts to fix the build plate to the clamp in the vertical direction and the friction between the build plate and the clamp fixes the build plate relative to the other directions. Alternatively or additionally, the force F may be at an angle to the longitudinal axis of the force member, for example if a lateral ball plunger is used.

The force member used for the invention is a ball plunger. The ball may rotate when the build plate is manually moved which allows for the removal and insertion of the build plate. However the force of the ball plunger is sufficient to fix the build plate in place and resist the negative effects of vibration and part forming forces from the extrusion head. In the embodiment shown in Figures 1 and 2, using 4 force members, an exemplary value of 0,5 millimeters of compression is used for the force members, which translates into sufficient force to hold approximately 8,3 newtons per spring, resulting in a total about 33.2 newtons. The force members are ball plungers.

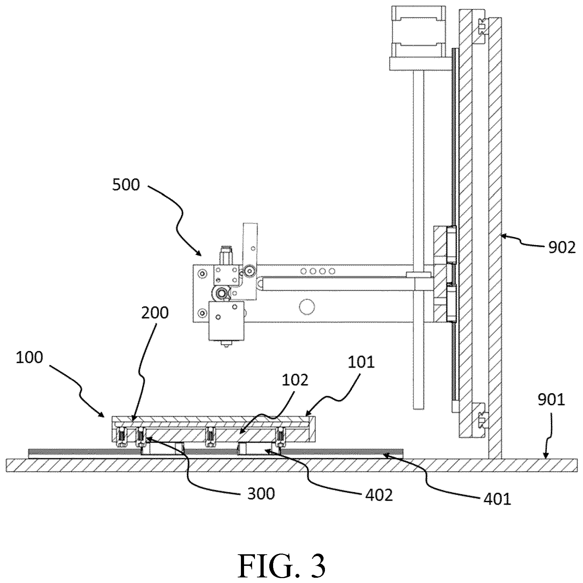

In a second exemplary embodiment, shown in Figures 3 and 4, 8 force members are used. A suitable amount of compression for the force members is for example 0.2 millimeters compression which translates to enough force to hold 7.5 newtons per spring, total about 59.8 newtons. The springs are ball plungers. The resulting friction force from aluminium / glass interface (friction coefficient about 0,4) is in the range of 13 newtons to 24 newtons. This results in reliable printing results.

In the embodiment shown in cross-section in Figure 3, the printing apparatus is comprised of the printer bed carriage 100 which comprises a carriage base 102 and at least one clamp 101 as well as at least one force member 300; the base plate 901 and the vertical plate 902 as well as the extrusion device 500 and the at least one linear bearing unit comprised by the linear rail 401 and the linear slide 402. In the Figure 3 the cross-sections of four force members are shown (only one is labelled). It is understood that the embodiment shown may comprise four or eight force members (as the force members may be paired). As can be seen in the figure the force members may be situated so that they are not equidistant from each other. In some of the embodiments of this disclosure, the force members may be staggered so that the placement alternates on different locations on the base plate. In some embodiments, at least some of the force members may be situated near the clamp and some force members at a greater distance from the clamp, e.g. having two rows of force members near the clamp and a single row of force members on the build plate centreline. The stability of the printing platform is beneficially affected by such an arrangement.

Continuing the description of Figure 3, the carriage base 100 is movably affixed to the base plate 901 by the linear bearing unit comprised of elements 401 and 402. The components may be attached to each other by at least any of the fastening means described in this disclosure. The base plate 901 is fixedly attached to the vertical plate 902 by any of the fastening means described in this disclosure. The vertical plate 902 is movably affixed to the extrusion device 500 which in the embodiment shown in Figure 3 is configured to move in the X-direction and Z-direction, that is sideways and upwards/ downwards as required by the printing process. The carriage base moves left and right as seen in the Figure 3 to facilitate the Cartesian range of motion required by the printing process.

In an alternative exemplary embodiment, the carriage base 100 is fixedly or stationarily attached to the base plate 901 and the printing device is configured to have three axes of movement (X, Y, Z) for the extrusion head 500. In a second alternative exemplary embodiment, the extrusion head moves in the XY directions and the carriage base moves in the vertical (Z) direction. The structures and methods described in this disclosure are equally applicable, usable and beneficial for these alternative embodiments as well as variations thereof.

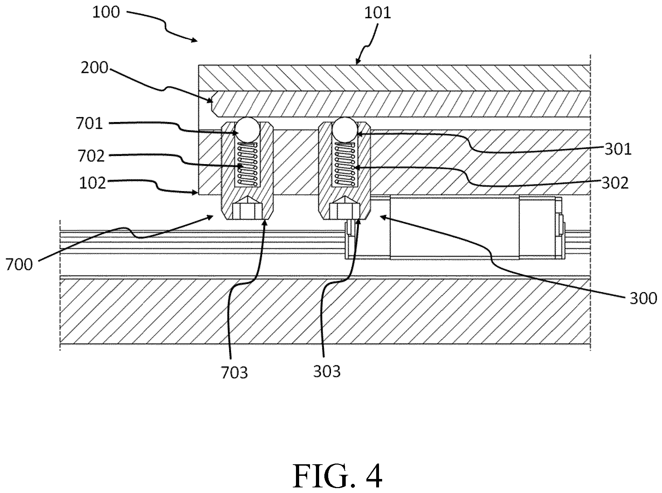

In a third exemplary embodiment shown in Figure 4, two force members 700 and 300 are used to actuate the printing platform 200 into contact with the clamp 101. Clamp 101 is fixed to the apparatus via alternative supports means in accordance with the fastening means disclosed herein, which are not shown in the figure for the sake of clarity. The force members 700 and 300 may be substantially similar or they may differ in construction, measurements, type of mechanism utilized, etc.

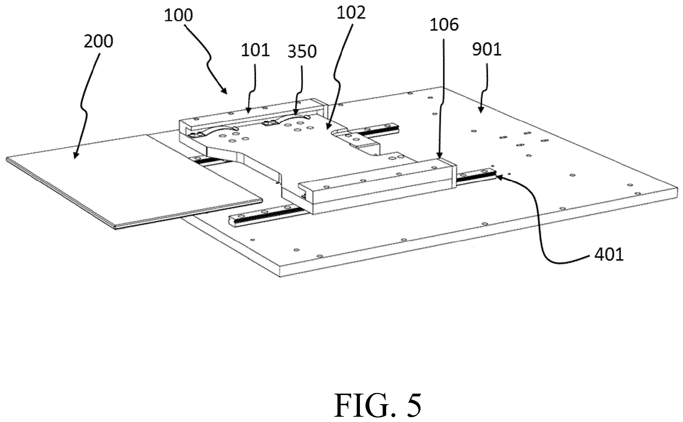

In a third exemplary embodiment shown in Figure 5, leaf springs are used as the force members. As depicted in the figure, at least one leaf spring 350 is situated so that it exerts an upward force on the printing platform 200 when the printing platform is inserted into the gap formed by the clamp 101 and the other clamp on the other side of the carriage base 102. The force results in the printing platform being pushed into contact with at least one surface of the clamp. As can be seen in the figure, at least one end stop 106 is used to prevent the printing platform from travelling too far with respect to the carriage base, i.e. the printing platform motion will be arrested when the leading edge contacts the end stop 106. The end stop may be used in any of the embodiments of this disclosure to prevent the printing platform from unwanted motion. The end stop may be implemented in any direction.

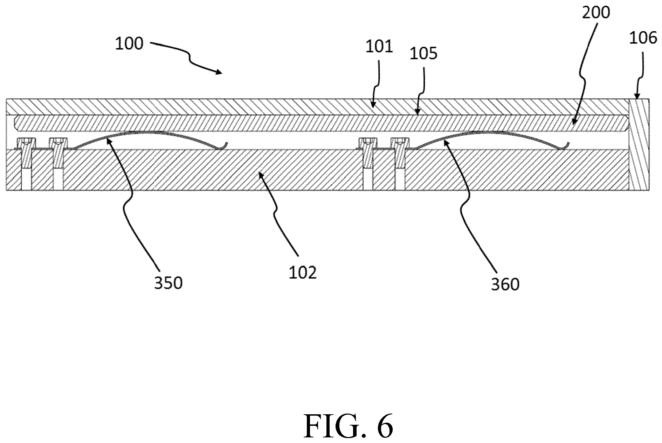

In Figure 6, a fourth exemplary embodiment is shown in cross-section wherein the force members 350 and 360 comprise leaf springs attached at one end by double bolts. The end stop 106 is shown preventing forward motion of the printing platform 200. The clamp 101 comprising the contact surface 105 is in contact with the upper surface of the printing platform 200. The force members 350 and 360 may be substantially similar or they may differ in construction, measurements, type of mechanism utilized, etc.

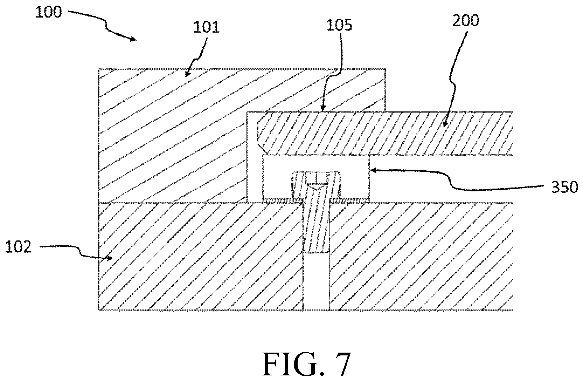

In a fifth exemplary embodiment, shown in cross-section in Figure 7, the force member 350 comprises a leaf spring and the at least one bolt fixing the spring to the base 102. The contact surface 105 arrests the upward motion of the printing platform 105.

In a further exemplary embodiment the printing bed 200 may have at least one notch to accommodate the force member, for example a circular hole or groove to accommodate a rotating element e.g. the ball of a ball plunger. The at least one notch may be comprised on any surface of the printing bed, such as the side surfaces. In a further exemplary embodiment, at least one of the printing platform, clamp and carriage base may comprise at least rail such as a rail according to specification MIL-STD-1913. In such an embodiment, the friction during the printing process may be increased by configuring the force member to interact with the notches in the rail.

In a further exemplary embodiment, the printing bed 200 may be immobilized during the printing process by the force member 300 in combination with another force member acting as the clamp 102. In this embodiment the friction required to be overcome for the insertion/removal operation is minimal, especially in the event that both the force member 300 and the clamp 102 incorporate a rotating element to contact the printing bed 200.

An embodiment in accordance with any of the aspects of the invention is a fixture apparatus or kit which comprises the carriage bed 100, the force member 300 and the clamp 101. Such a fixture or kit apparatus may be used to retrofit existing 3D printers.

The attachment mechanism disclosed herein allows for easy removal and insertion of the printing platform. A major benefit is that the removal and reinsertion of a printing platform does not require calibration, even in the event that the printing platform is swapped. In addition, the construction allows usage of cost-effective, simple build plates as printing platforms and doesn't require additional calibration or adjustment by users. The mechanism disclosed herein eliminates the need for calibration solutions such as: process solutions (homing), software solutions (calculation and alteration of paths to correct skew) and control solutions (sensors and/or calibration patterns). The robustness of the mechanism with respect to the fabrication forces and vibration also provides increased end-product quality and increased process speed compared to previous solutions.

With respect to the control apparatus, one type of controller may comprise, for example, at least one computing device such a server, node or cloud computing device. Comprised in the computing device is a processor, which may comprise, for example, a single- or multi-core processor wherein a single-core processor comprises one processing core and a multi-core processor comprises more than one processing core. The processor may comprise more than one processor. A processing core may comprise, for example, a Cortex-A8 processing core by ARM Holdings or a Steamroller processing core produced by Advanced Micro Devices Corporation. The processor may comprise at least one Qualcomm Snapdragon and/or Intel Core processor, for example. The processor may comprise at least one application-specific integrated circuit, ASIC. The processor may comprise at least one field-programmable gate array, FPGA. The processor may be a means for performing method steps in the computing device. The processor may be configured, at least in part by computer instructions, to perform actions.

In the context of the present disclosure, it is understood that the control apparatus may comprise several devices in cooperation. The devices may interface via a network used to facilitate communication to and from control apparatuses, extrusion devices, radiation devices, measurement devices, meters, motors, gantries and other elements. Usable network technologies comprise: wireless local area network, WLAN, Ethernet, universal serial bus, USB, and/or worldwide interoperability for microwave access, WiMAX, standards, and satellite communication methods, direct wiring such as electrical wires, for example. Alternatively or additionally, a proprietary communication framework may be utilized. In some embodiments, separate networks may be used for one or more of the following purposes: communication between control apparatuses, communication between control apparatuses and devices, communication between controllers and servers, et cetera.

In some embodiments, a programmable logic controller, PLC, may be used as the controller of a 3D printing apparatus. The standard IEC 61131 defines programmable logic controllers, however, in the present disclosure the term PLC is not limited to the standard. The PLC may be connected to the devices by a variety of means, including but not limited to electrical wires.

In relation to the current disclosure, the process value of a device such as a extrusion device, motor, or radiation device may be adjusted according to various determination criteria comprising: preprogrammed instructions, communications received from other devices including the presence or absence of first or third party devices, presence and absence of personnel, elapsed time, preset time, measurements internal or external to the forming process, user inputs and timing, battery levels, network data, detected usage, planned usage or any combination thereof. Devices may also have preprogrammed activities or processes. These may be triggered based on the criteria listed above.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In this description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in three-dimensional fabrication of shapes or objects.

### ACRONYMS LIST

- CNC: Computerized numerical control
- FDM: Fused deposition modelling
- FFF: Fused filament fabrication

### REFERENCE SIGNS LIST

| | |
|---|---|
| 100 | Printer bed carriage |
| 101 | Clamp |
| 102 | Carriage base |
| 105 | Clamp surface |
| 106 | End stop |
| 200 | Printing platform |
| 300 | Force member |
| 301 | Rotating element of force member |
| 302 | Actuating element of force member |
| 303 | Housing of force member |
| 350 | Force member |
| 360 | Force member |
| 400 | Linear bearing unit |
| 401 | Linear rail |
| 402 | Linear slide |
| 500 | Extrusion apparatus |
| 700 | Force member |
| 701 | Rotating element of force member |
| 702 | Actuating element of force member |
| 703 | Housing of force member |
| 901 | Base plate |
| 902 | Vertical plate |

## Claims

1. An extrusion-type 3D-printer comprising a printing platform fixture apparatus, the apparatus comprising:
- a printing platform carriage (100), comprising at least one force member (300, 700) configured to support and exert a force on a removable printing platform (200),
- at least one clamp (101);
wherein
the at least one force member (300, 700) is a ball plunger, and
wherein the at least one ball plunger (300, 700) is configured to support and exert a force on a removable printing platform (200) in such a manner that at least one surface of the removable printing platform (200) contacts at least one surface (105) of the clamp (101).

2. The extrusion-type 3D-printer of claim 1, wherein the printing platform (200) is of plastic material.

3. The extrusion-type 3D-printer of any preceding claim, wherein the apparatus comprises 2-8 ball plungers (300, 700).

4. The extrusion-type 3D-printer of any preceding claim, wherein the at least one ball plunger (300, 700) is configured in such a manner that the at least one surface of the removable printing platform (200) will contact at least one surface (105) of the clamp (101) on the opposite side of the printing platform (200) side from the ball plunger (300, 700) .

5. The extrusion-type 3D-printer of any preceding claim, wherein the printing platform (200) has a thickness of 1 millimeter to 100 millimeters, in particularly from 2 to 50 millimeters, preferably from 3 to 5 millimeters.

6. The extrusion-type 3D-printer of any preceding claim, wherein the clamp (101) is a continuous profile extending the length of the printer bed carriage (100).

7. The extrusion-type 3D-printer of any preceding claim, wherein the total forces of ball plungers (300, 700) are 10-150 newtons, especially 25-75, for example about 33 newtons.

8. The extrusion-type 3D-printer of any preceding claim, wherein the clamp (101) is fixedly attached to the printing platform carriage (100) or is an integral part of the printing platform carriage (100).

9. The extrusion-type 3D-printer of any preceding claim, wherein the printing platform carriage (100) comprises a stopper (106) configured to prevent the printing platform (200) from movement in a direction perpendicular to the printing platform carriage (100).

10. The extrusion-type 3D-printer of any preceding claim, wherein the clamp (101) comprises a contacting surface parallel to the upper surface of the printing platform carriage (200) or parallel to a reference surface of a 3D printer apparatus.

11. The extrusion-type 3D-printer of any preceding claim, wherein the apparatus comprises at least two clamps (101), wherein contacting surfaces of the clamps are arranged coplanar to each other.

12. Use of the extrusion-type 3D-printer according to any one of claims 1-9, wherein
the removable printing platform (200) is inserted between the at least one ball plunger (300, 700) and the clamp (101).

## Patentansprüche

1. 3D-Drucker vom Extrusionstyp, umfassend eine Druckplattform-Befestigungsvorrichtung, wobei die Vorrichtung umfasst:
- einen Druckplattformschlitten (100), der mindestens ein Kraftelement (300, 700) umfasst, das eingerichtet ist, um eine entfernbare Druckplattform (200) zu tragen und eine Kraft auf sie auszuüben,
- mindestens eine Klemme (101);
wobei
das mindestens eine Kraftelement (300, 700) ein Kugelstößel ist, und
wobei der mindestens eine Kugelstößel (300, 700) eingerichtet ist, um eine entfernbare Druckplattform (200) derart zu tragen und eine Kraft auf sie auszuüben, dass mindestens eine Fläche der entfernbaren Druckplattform (200) mindestens eine Fläche (105) der Klemme (101) berührt.

2. 3D-Drucker vom Extrusionstyp nach Anspruch 1, wobei die Druckplattform (200) aus Kunststoffmaterial besteht.

3. 3D-Drucker vom Extrusionstyp nach einem der vorhergehenden Ansprüche, wobei die Vorrichtung 2-8 Kugelstößel (300, 700) umfasst.

4. 3D-Drucker vom Extrusionstyp nach einem der vorhergehenden Ansprüche, wobei der mindestens eine Kugelstößel (300, 700) derart eingerichtet ist, dass die mindestens eine Fläche der entfernbaren Druckplattform (200) mindestens eine Fläche (105) der Klemme (101) auf der gegenüberliegenden Seite der Druckplattform (200) von dem Kugelstößel (300, 700) berühren wird.

5. 3D-Drucker vom Extrusionstyp nach einem der vorhergehenden Ansprüche, wobei die Druckplattform (200) eine Dicke von 1 Millimeter bis 100 Millimeter, insbesondere von 2 bis 50 Millimeter, vorzugsweise von 3 bis 5 Millimeter, aufweist.

6. 3D-Drucker vom Extrusionstyp nach einem der vorhergehenden Ansprüche, wobei die Klemme (101) ein durchgehendes Profil ist, das sich über die Länge des Druckerbettschlittens (100) erstreckt.

7. 3D-Drucker vom Extrusionstyp nach einem der vorhergehenden Ansprüche, wobei die Gesamtkräfte der Kugelstößel (300, 700) 10-150 Newton, insbesondere 25-75, zum Beispiel etwa 33 Newton, betragen.

8. 3D-Drucker vom Extrusionstyp nach einem der vorhergehenden Ansprüche, wobei die Klemme (101) fest an dem Druckplattformschlitten (100) angebracht ist oder ein integraler Bestandteil des Druckplattformschlittens (100) ist.

9. 3D-Drucker vom Extrusionstyp nach einem der vorhergehenden Ansprüche, wobei der Druckplattformschlitten (100) einen Anschlag (106) umfasst, der eingerichtet ist, um die Druckplattform (200) an einer Bewegung in einer Richtung senkrecht zu dem Druckplattformschlitten (100) zu hindern.

10. 3D-Drucker vom Extrusionstyp nach einem der vorhergehenden Ansprüche, wobei die Klemme (101) eine Kontaktfläche umfasst, die parallel zu der oberen Fläche des Druckplattformschlittens (200) oder parallel zu einer Referenzfläche einer 3D-Druckervorrichtung verläuft.

11. 3D-Drucker vom Extrusionstyp nach einem der vorhergehenden Ansprüche, wobei die Vorrichtung mindestens zwei Klemmen (101) umfasst, wobei die Kontaktflächen der Klemmen koplanar zueinander angeordnet sind.

12. Verwendung des 3D-Druckers vom Extrusionstyp nach einem der Ansprüche 1-9, wobei die entfernbare Druckplattform (200) zwischen dem mindestens einen Kugelstößel (300, 700) und der Klemme (101) eingesetzt ist.

## Revendications

1. Imprimante 3D de type à extrusion, comprenant un appareillage d'agencement de plateforme d'impression, l'appareillage comprenant :
- un chariot de plateforme d'impression (100) comprenant au moins un membre de force (300, 700) configuré pour supporter et exercer une force sur une plateforme d'impression amovible (200),
- au moins une pince (101) ;
dans laquelle
l'au moins un membre de force (300, 700) est un plongeur à bille, et
dans laquelle l'au moins un plongeur à bille (300, 700) est configuré pour supporter et exercer une force sur la plateforme d'impression amovible (200) de telle façon qu'au moins une surface de la plateforme d'impression amovible (200) soit en contact avec au moins une surface (105) de la pince (101).

2. Imprimante 3D de type à extrusion selon la revendication 1, dans laquelle la plateforme d'impression (200) est en matériau plastique.

3. Imprimante 3D de type à extrusion selon l'une quelconque revendication précédente, dans laquelle l'appareil comprend 2-8 plongeurs à bille (300, 700).

4. Imprimante 3D de type à extrusion selon l'une quelconque revendication précédente, dans laquelle l'au moins un plongeur à bille (300, 700) est configuré d'une telle façon que l'au moins une surface de la plateforme d'impression amovible (200) contactera au moins une surface (105) de la pince (101) sur le côté opposé du côté plateforme d'impression (200) à partir du plongeur à bille (300, 700).

5. Imprimante 3D de type à extrusion selon l'une quelconque revendication précédente, dans laquelle la plateforme d'impression (200) présente une épaisseur de 1 millimètre à 100 millimètres, en particulier de 2 à 50 millimètres, de préférence de 3 à 5 millimètres.

6. Imprimante 3D de type à extrusion selon l'une quelconque revendication précédente, dans laquelle la pince (101) est un profilé continu étendant la longueur du chariot du lit d'imprimante (100).

7. Imprimante 3D de type à extrusion selon l'une quelconque revendication précédente, dans laquelle les forces totales de plongeurs à bille (300, 700) sont de 10-150 newtons, spécialement de 25-75, par exemple d'environ 33 newtons.

8. Imprimante 3D de type à extrusion selon l'une quelconque revendication précédente, dans laquelle la pince (101) est fixée au chariot de plateforme d'impression (100) ou fait partie intégrante du chariot de plateforme d'impression (100).

9. Imprimante 3D de type à extrusion selon l'une quelconque revendication précédente, dans laquelle le chariot de plateforme d'impression (100) comprend une butée (106) configurée pour empêcher la plateforme d'impression (200) de se déplacer dans une direction perpendiculaire au chariot de plateforme d'impression (100).

10. Imprimante 3D de type à extrusion selon l'une quelconque revendication précédente, dans laquelle la pince (101) comprend une surface de contact parallèle à la surface supérieure du chariot de plateforme d'impression (200) ou parallèle à une surface de référence d'un appareil d'impression 3D.

11. Imprimante 3D de type à extrusion selon l'une quelconque revendication précédente, dans laquelle l'appareil comprend au moins deux pinces (101), dans laquelle des surfaces de contact des pinces sont agencées coplanaires l'une à l'autre.

12. Utilisation de l'imprimante 3D selon l'une quelconque des revendications 1-9, dans laquelle la plateforme d'impression amovible (200) est insérée entre l'au moins un plongeur à bille (300, 700) et la pince (101).
